# EUROPEAN PATENT APPLICATION

(11) **EP 2 724 638 A1**
(43) Date of publication of application: **30.04.2014**
(21) Application number: 13190517.6
(22) Date of filing: 28.10.2013
(51) Int. Cl.: A45C 13/20, A45C 13/02, E05B 67/00, E05B 73/00

(54) **Closure device for securing objects contained inside a body**

(30) Priority: 29.10.2012 ES 201231657
(71) Applicant: Gliese 581, S.L., 08790 Sant Joan Despi (ES)
(72) Inventor: Romero Pedret, Luis, 08970 Sant Joan Despi (ES)
(74) Representative: ZBM Patents - Zea, Barlocci & Markvardsen

(57) **Abstract**

It comprises a strip (110) passing through the object (300a, 300b) stored in the body (200a, 200b), a retaining device (400) for retaining the strip (110) and an actuator (500) with a locking area (504) matching a locking area (604) of one end (111) of the strip (110). When the actuator (500) is in a locking position, the end (111) of the strip (110) is coupled to the retaining device (400) and when the actuator (500) is in an unlocking position, the end (111) of the strip (110) can be decoupled from the retaining device (400). The locking area (504) of the actuator (500) has a protrusion (505) and the locking area (604) of the end (111) of the elongated member (110) has a recess (605) for receiving the protrusion (505). Locking means (700) are provided for retaining the actuator (500) at least in a locking position.

## Description

### Technical field

The present disclosure relates to a closure device according to the combination of features included in the pre-characterizing portion of claim 1. Also described herein is a security bag according to the combination of features included in the pre-characterizing portion of claim 16.

The present closure device has been mainly developed for effectively securing objects contained inside a body, such as a bag, a backpack, a briefcase, a case, or the like. The present closure device can be however applied to other bodies and, in general, to hollow bodies adapted to receive objects therein.

The present closure device essentially comprises an elongated member, such as a strip or a wire. This strip or wire is made of a resistant material such as metal or metal alloy. The strip of wire of device described herein is intended to be passed through the object to be stored inside the hollow body and which is received therein. The strip or wire has at least two ends.

The closure device further comprises at least one retaining device. This retaining device is intended to releasably hold at least one end of said elongated member (strip or wire) for securely holding the object to be stored inside the hollow body, such as a bag, a suitcase, a backpack, a briefcase, a case or the like, as stated above by way of non-limiting examples of possible applications in which the present closure device can be fitted.

The closure device described herein is particularly advantageous for effectively securing objects inside a body with great effectiveness, preventing them from being removed therefrom by an unauthorized person. Non-limiting examples of objects that can be stored safely with the present closure device may be a motorcycle helmet, a laptop, tools, and any other object, particularly of a certain value to the user, having a through opening through which said elongated member (wire, strip) of the present device can be passed. Of course if the object to be stored inside the body does not have such through opening, the object could have an accessory fixedly coupled thereto having such through opening for the passage of the strip or wire therethrough.

### Background

Bags, backpacks, suitcases, or the like (hereinafter referred to body or hollow body) are known which are provided with antitheft means. Such antitheft means are intended to prevent the interior of the body from being accessed by unauthorized persons, or for preventing the object stored inside from being removed therefrom by unauthorized persons.

In the first case, mesh type solutions are known such as those described in patent documents EP1285598, EP0878143 and US6244081. These solutions known in the art consist of a resistant metallic mesh surrounding or covering the bag, backpack, etc. The mesh has a locking device which prevents or at least hinders them from being opened by unauthorized persons and, therefore, prevents the interior of the bag or the like to be accessed by unauthorized persons. These solutions, however, result in that the use of the bag, backpack, etc. becomes cumbersome and uncomfortable for the user who has to fit the mesh in and to remove it from the bag or the like continuously during regular use.

In the second case, i.e., solutions based on providing means for preventing removal of the objects stored inside the body by unauthorized persons, the safety means of the object stored inside the bag, backpack, etc. are usually provided therewithin, unlike the above case, where the mesh was provided outside. For example, patent document US5791170 discloses a closure device in which the elongated member is a wire. Such closure device further includes a retaining member intended for releasably holding one end of said cable. The main disadvantage of this kind of devices is that they are complex and especially bulky. This disadvantage is mainly due to the fact that the retaining member includes a key mechanism therein. For this reason, this prior art solution is not advantageous as a locking device for securing objects contained inside a body, especially if the body is a portable object that must be carried by the user, such as a bag, suitcase, briefcase, backpack, case or the like.

A safety closure device is therefore desirable which is effective, ensures safety of the object inside the body from unauthorized persons and, in turn, it is small in size, simple and cost effective without affecting or impeding the normal use of the body.

### Description

A closure device for securing objects contained inside of a body according to the combination of features included in claim 1 is disclosed in the following with which the aforementioned technical problems relating to the devices that have been used so far for the same purpose are at least partially overcome. As it will be set out hereinafter, the present closure device which will be described in the following not only effectively solves the above technical problems but it also provides a number of additional advantages.

As indicated above, the word 'body' or 'hollow body' as used herein is intended to define with no limitations a member having a space in its interior for storing objects. Such body can be, for example, a bag, a backpack, a suitcase, a briefcase, a case, or any similar object intended for storing objects in its interior. The 'objects' that can be stored inside the hollow body may be, for example, a helmet, a tool, a laptop, etc. The object that can be stored inside the hollow body has, formed therein or applied thereto, an area through which a strip or a wire can be passed through. In the case where the object is a helmet, for example, the area through which the strip or wire is passed through may be the area of the helmet shield.

The elongated body of this closure device that is intended to be passed through the object contained therein may have various arrangements. Although it is preferred a strip or wire made of metal or of a suitable alloy, this is not limited to such arrangements and it may be a belt, a band or another elongated member made of a cut and/or tear resistant material.

This closure device further includes at least one retaining device. The retaining device is adapted for releasably holding at least one end of said elongated member for securing the object or objects contained inside a body.

According to an important aspect of the present closure device for securing objects, the retaining device comprises a movable actuator. Such movable actuator, which is preferably arranged outside the hollow body, has a locking area. This locking area of the actuator has a shape matching the shape of a corresponding locking area of at least one end of the elongated member. Both the actuator locking area and the locking area of at least one end of the elongated member are such that when the actuator is in a locking position, the end of the elongated member is engaged in the retaining device, and when the actuator is in an unlocking position, said end of the elongated member can be disengaged from the retaining device, thus releasing the object.

This locking area of the actuator may have a protrusion, while the matching locking area of the end of the elongated member may have a recess for receiving said protrusion. This recess may be a through recess. However, other embodiments are not ruled out where the arrangement is reversed, i.e., the locking area of the actuator may have a recess, which may be a through recess, while the matching locking area end of the elongated member may have a protrusion intended to be inserted into said recess. Generally, the arrangements of the locking areas of the elongated member and the actuator may differ from the above described examples, provided that both are complementary and enable at least one locking position in which the end of the elongated member is securely locked in the retaining member and at least one unlocking position in which the end of the elongated member may be released from the retaining device.

This closure device may further comprise means for locking the actuator in position for preventing it from being moved at least when it is in the locking position. Such means for locking the actuator may be, for example, a block provided with a recess suitable to receive at least one portion of the actuator and an actuator locking member from preventing the actuator from being moved. The locking member can be actuated for example through a key. Other means for actuating the locking member alternative to the key operated lock are however not ruled out. The means for locking the actuator can be fixed anywhere outside the body (bag, suitcase, etc.). In one example in which the present closure device is applied to a bag intended for storing a motorcycle helmet, the block of the means for locking the actuator may be part of a part of the motorcycle, such as for example one bar end or any other suitable part.

It is also foreseen that the retaining device is so arranged that the actuator is concealed therein. This provides an advantageous aesthetic appearance to the body where it is mounted, while also avoiding protruding areas that may be annoying to the user. In one example, the retaining device may include a recess or cavity adapted to at least partially receive the actuator.

In the preferred embodiment of the present closure device, the actuator is a lever. This lever is sized and shaped for comfortable gripping by the user and it is rotatably mounted in the retaining device. This lever has a free end adapted for easy rotation by the user. The lever has an opposite end in which, or near which, the pivot point is provided relative to the retaining device. The matching locking area of the end of the elongated member is also in this opposite end.

According to a further advantageous feature of the retaining device, it may comprise at least two retaining parts. The two retaining parts can be coupled together. Specifically, such retainer parts can be fixed together through one or more screws and/or by welding. However, other suitable fastening means are not ruled out and it may be a fixed or releasable coupling.

The screws for mutual fastening of the two retaining parts can be covered by a number of individual lids (as many as screws) or by means of a single common lid concealing the screws simultaneously. In any case, the lids may be adapted to cover at least the head of the screws.

The retaining parts of the retaining device described herein are suitably adapted so that the portion of the body is arranged between them when the assembly is assembled and ready for use. In the particular case in which the body is a bag, for example, one portion of a wall of the bag is between the two retaining parts when the assembly is assembled and ready for use, as indicated. As explained above, the two retaining parts can have a releasable coupling. This allows the two retaining parts to be disassembled from each other, for example, to wash the bag in a washing machine, to replace the retaining device, etc.

In some embodiments of the locking device, one end of the elongated member is permanently fixed to the retaining device while the other end of the elongated member is adapted to engage the retaining device and be releasably retained therein. However, in other embodiments it is foreseen that one end of the elongated member remains fixed on a wall of the body (instead of on the retaining device) while the other end of the elongated member is adapted to engage the retaining device and be releasably retained thereon. In other alternative embodiments, however, both ends of the elongated member could be releasably coupled to the retaining device. In general, it is foreseen that the closure device is such that it allows an object inside a bag, suitcase, case, briefcase, backpack or the like to be releasably and safely retained therein.

In advantageous embodiments, the present closure device may further comprise an alarm device. This alarm device can be provided with means for outputting an audible and/or visual and/or other signal when the bag, suitcase or the like is opened or attempted to be opened by unauthorized persons. The alarm can be a pendulum alarm or the like, which detects any movement affecting the body. The means for outputting a signal can advantageously be combined, for example, with a tracking device, such as a GPS device. It is also foreseen that the alarm device can be armed, for example, when bringing the actuator toward the locking position. Alternatively or additionally, the alarm device can be armed when attaching one or both ends of the elongated member on the retaining device. Alternatively or additionally, the present closure device may further include means for remotely arming/disarming the alarm. This can be done, for example, through a remote control suitably programmed for this purpose. Other options of the alarm device, such as a panic function that triggers means for outputting a signal as desired by the user although the alarm device is not armed, for example, can be activated by this remote control.

The present closure device may further comprise biasing means acting on the actuator. Such biasing means may be adapted, for example, to keep the actuator in the locking position. Where a sliding actuator is used, the biasing means may consist of a compression spring. Where a rotatably driven lever actuator is used, the spring means may consist, for example, of a torsion spring. However, other biasing means suitable for acting on the actuator are not ruled out.

The present closure device may further include means for retracting the elongated member. Such retracting means are advantageous since they allow the length of the elongated member to be reduced, taking up minimal space inside the body. Furthermore, said retracting means are also advantageous since they allow the stored object to be effectively held therein, limiting its movement within the body. In some embodiments it is foreseen that a housing is included adapted to receive the elongated member therein when not in use. This housing for storing the elongated member when not in use can be part of the retaining device or it may be formed separately therefrom, or it can be coupled to the hollow body. The elongated member retracting means may be received inside the housing.

Although the device described herein provides a high level of safety to the objects stored inside the body, in some cases it may be also provided with an auxiliary closure device. Such an auxiliary closure device could be provided within the body and may comprise an auxiliary lock capable of acting, for example, when inserting a key (which may be the same as that of the locking means of the lever) or other means such as an electronic fingerprint detection system, with a locking block movably disposed within the retaining device. This locking block can be slid from an unlocking position to a locking position where it is capable to retain in position at least one end of the strip that is at least partially inserted into the retaining device.

With this auxiliary closure device, one or both ends of the strip can be retained through both the lever and the auxiliary closure device. Thus, the strip can be locked both from the inside and from the outside the body. The advantage of this arrangement is clear, since a greater security is provided to the object stored inside the body without adding too much complexity to the assembly.

A security bag according to the combination of features included in the pre-characterizing portion of claim 16 is also described. Specifically, the security bag includes a body adapted to store at least one object therein. The security bag disclosed herein includes at least one closure device such as that described above. However, embodiments in which the bag includes multiple retaining devices such as those described above are not ruled out.

Other objects, advantages and features of embodiments of the present closure device and body to which it can be applied will be apparent to those skilled in the art from the description or by practice the present disclosure of such embodiments.

### Brief description of the drawings

A number of particular embodiments of the present closure device and the body to which it can be applied will be described below. These embodiments are given by way of non-limiting example with reference to the drawings attached herein.

In such drawings:
Figure 1a is a cutaway elevational view of a first embodiment of the closure device in which one of the ends of the elongated body, in this example a strip, can be releasably coupled to the retaining device while the other end of the strip is fixed to the same retaining device;
Figure 1b is an enlarged fragmentary elevational view showing in detail the lever of the embodiment of the retaining device shown in figure 1a, in a locking position;
Figure 2 is an elevational view of a metal strip as an example of elongated member, with both ends of the strip of the closure device being shown in this figure;
Figure 3 is an exploded perspective view of the embodiment of the closure device in figure 1a showing the strip illustrated with its ends decoupled from the retaining device;
Figure 4 is an exploded perspective view similar to figure 3 but with the strip illustrated with its ends coupled to the retaining device;
Figure 4a is an exploded perspective view of the retaining device with the lever in an unlocking position showing the cover intended to cover the screws securing the two retaining parts;
Figure 4b is a perspective view of the retaining device according to figure 4a showing the cover for concealing the screws coupled to the outer retaining part concealing the screws securing both retaining parts;
Figure 5 is a cutaway elevational view of a second embodiment of the locking device in which one end of the strip may be releasably coupled to the retaining device while the other end of the strip is fixed on a wall of the body;
Figure 6 is a cutaway elevational view of a third embodiment of the closure device in which one end of the strip may be releasably coupled to the retaining device and through which the other end of the strip can be passed;
Figure 7 is a cutaway elevational view of a fourth embodiment of the closure device in which both ends of the strip may be releasably coupled to the retaining device;
Figure 8a is a cutaway elevation view of one embodiment of an auxiliary closure device applicable to the closure device, the auxiliary closure device being shown in an unlocking position and the lever in an unlocking position;
Figure 8b is a cutaway elevational view of the embodiment of the auxiliary closure device of the figure, the auxiliary closure device being shown in a locking position and the lever in a locking position;
Figures 9-12 are cutaway elevational views of the closure device showing various embodiments of the retracting means;
Figure 13 is a perspective view illustrating a first example of the present closure device applied to a safety bag inside of which a motorcycle helmet is stored;
Figure 14 is a perspective view illustrating a second example of the present device applied to a security briefcase provided with said closure device with a tool received therein;
Figure 15 is a fragmentary perspective view of the example shown in figure 14, wherein the briefcase is provided with the first embodiment of the closure device, shown in figure 1a;
Figure 16 is a fragmentary perspective view of the example shown in figure 14, wherein the briefcase is provided with the second embodiment of the closure device, shown in figure 5;
Figure 17 is a fragmentary perspective view of the example shown in figure 14, wherein the briefcase is provided with the third embodiment of the closure device and the auxiliary closure device shown in figures 8a and 8b; and
Figures 18 and 19 show, respectively, exploded perspective, cutaway elevational and plan views of a further embodiment of the means for locking the closure device, separated from the retaining device.

### Description of embodiments

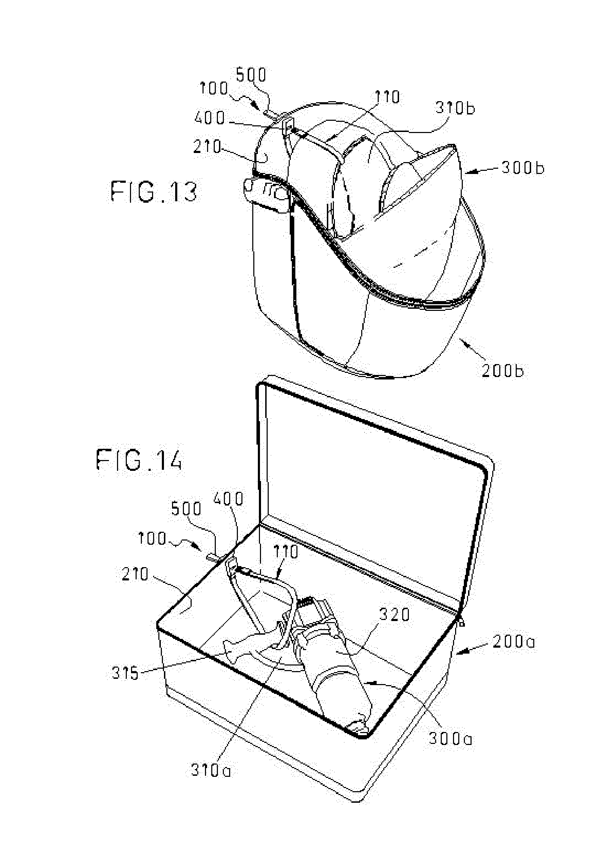

Several example embodiments of a closure device for securing one or more objects contained inside a hollow body are described below. The embodiments that will be described below correspond to those where the closure device is applied to a briefcase for storing a tool therein (figures 14-17) and also to a bag for storing a motorcycle helmet (figure 13). It is to be understood, however, that the present closure device is not limited to these applications and it can be used in suitcases, cases, backpacks, handbags, etc. and other similar hollow bodies that are adapted for storing these and other objects therein.

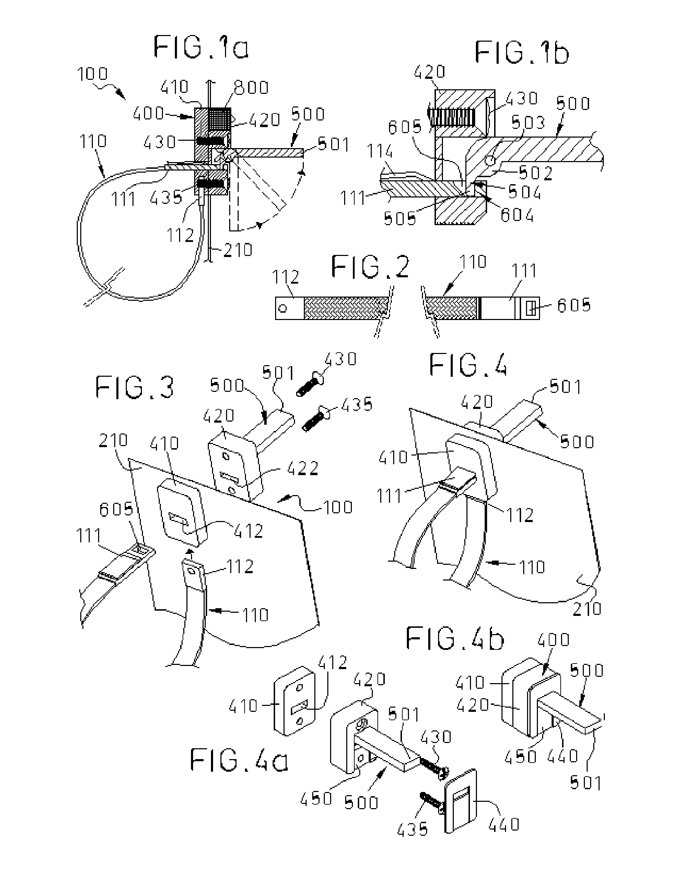

The closure device illustrated by way of non-limiting example in figures 1 to 19 has been designated by the reference numeral 100. The hollow body to which the closure device 100 is applied has been designated as a whole by reference numeral 200a for the case of the briefcase (figures 14 to 17) and by reference numeral 200b for the case of the bag (figure 13). In the embodiment in which the hollow body is a case brief200a, the object 300a stored therein is a tool. In the embodiment in which the hollow body is a bag 200b, the object 300b stored therein is a motorcycle helmet. Of course the briefcase 200a, the bag 200b or any other similar hollow body is susceptible to safely store objects other than the tool 300a and the motorcycle helmet 300b by the closure device 100 which will be described below with reference to the drawings.

According to the accompanying drawings, the closure device 100 comprises an elongated member 110 having two ends 111, 112. In all the example embodiments included herein, the elongated member 110 shown in the figures is a cut and/or tear resistant metal strip. The metal strip 110 is designed to be passed through the object 300a, 300b that is inside the briefcase 200a or the bag 200b. Specifically, in the embodiment of the suitcase 200a the strip 110 is intended to be passed through the aperture 310a provided between the grip 315 and the body 300a of the tool 320, as shown in figure 14. In the embodiment of the bag 200b, the strip 110 is intended to be passed through the opening 310b provided above the helmet chin guard 300b, that is, the area where the helmet shield is provided, as shown in figure 13 of the drawings.

The closure device 100 further includes a retaining device 400. The retaining device 400 is adapted for releasably holding either one of the ends 111 of the strip 110, the other end 112 of the strip 110 or both ends 111, 112 of the strip 110, in order to effectively and safely retain the object 300a, 300b that is contained inside the body 200a, 200b.

From the foregoing general arrangement, several advantageous embodiments are possible, as described below.

In a first embodiment of the closure device 100, the retaining device 400 is adapted for releasably holding only one end 111 of the strip 110, as shown in the embodiments of figures 1, 5, 6, 8a, 8b, 9-15 and 17. Fastening of the end 111 of the strip 110 occurs when the same is at least partially inserted within an aperture 412 provided in the retaining device 400. As shown in the figures, the end 111 of the strip 110 includes an elastic area 114 which ensures a good connection inside the opening 412 of the retaining device 400.

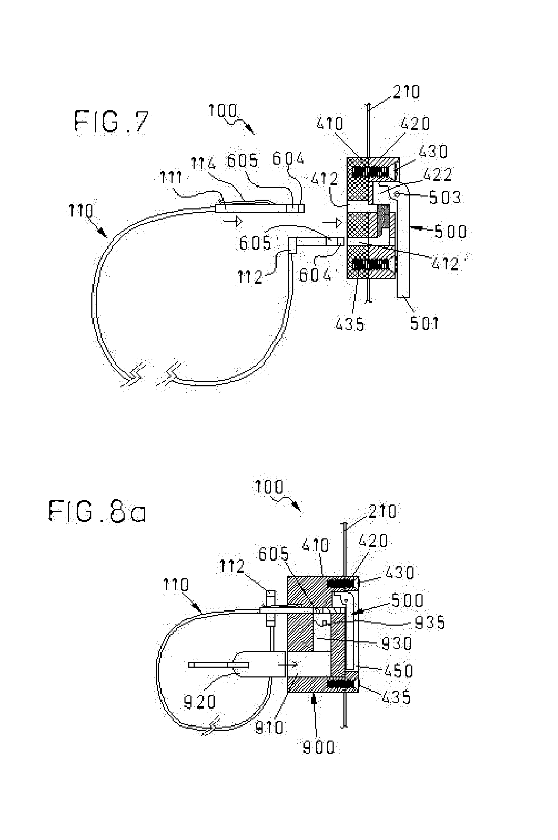

In a second embodiment of the closure device 100, the retaining device 400 may be adapted for releasably holding both ends 111, 112 of the strip 110, as shown in the embodiments of figures 3 and 7 of the drawings. Here, the two ends 111, 112 of the strip 110 include respective matching recesses 605, 605' provided in corresponding locking areas 604, 604' thereof. Said ends are adapted to be at least partially received within apertures 412, 412' provided in the retaining device 400.

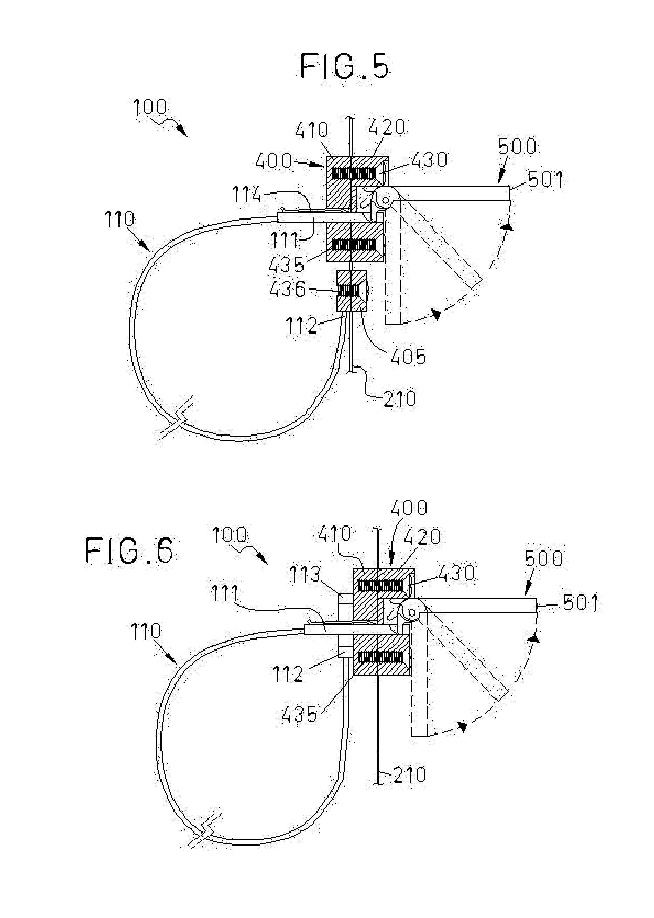

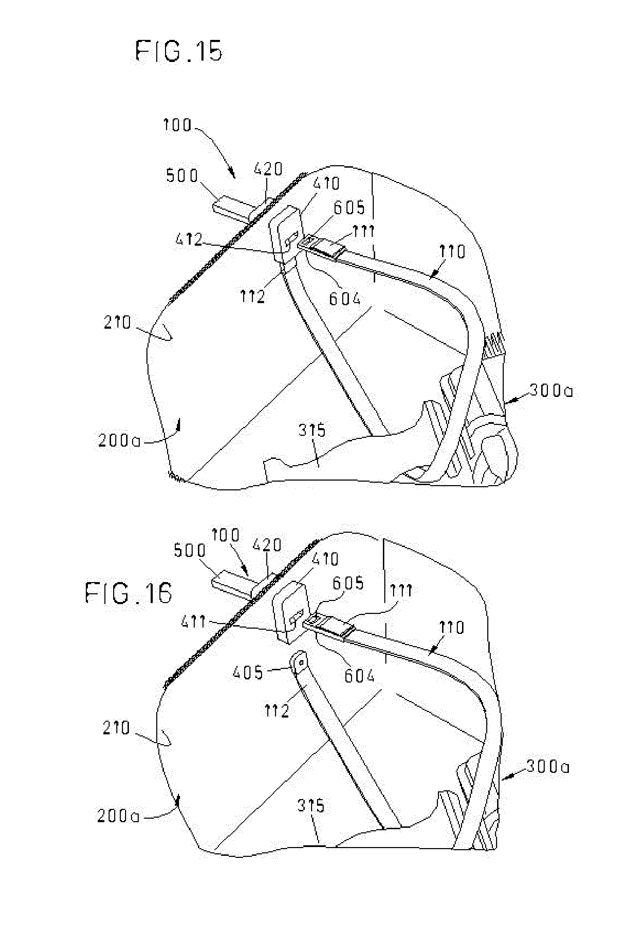

In a third variant, as shown in figures 5 and 16 of the drawings, the other end 112, that is, the one that does not releasably engage the retaining device 400, can be fixed in the retaining device 400 itself through a screw 435 which passes through the end 112 of the strip 110, as shown in figure 1. However, also said other end 112 can be fixed directly to the wall 210 of the briefcase 200a or the bag 200b. Fastening of the end 112 of the strap 110 directly to the wall 210 of the briefcase 200a or the bag 200b is carried out through a fastener 405 by means of which a corresponding screw 436 is allowed to pass retaining said end 112 of the strip 100 and engages the wall 210 of the briefcase 200a or the bag 200b. One possible embodiment of the fastener 405 is shown in detail in figure 5.

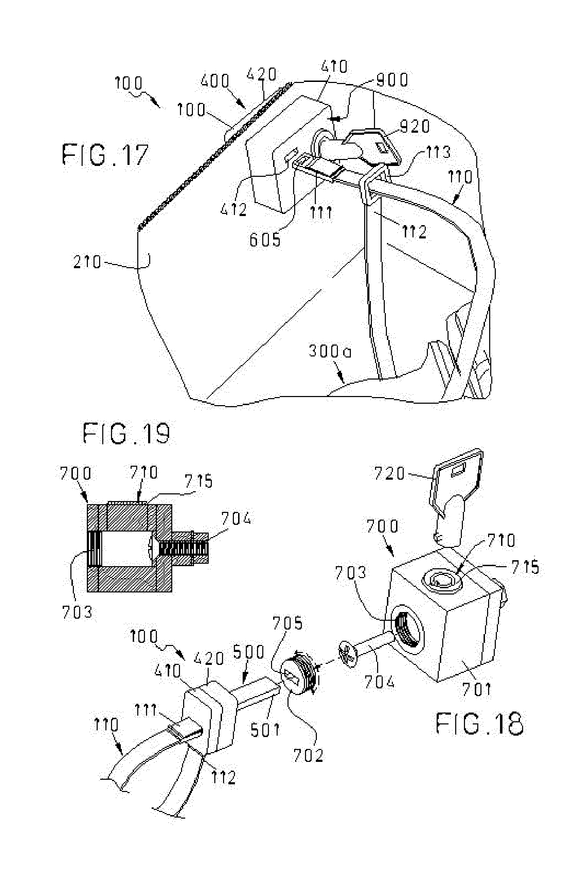

In a third variant of the closure device, as shown in figures 6 and 17, for example, one end 111 of the strip 100 may be releasably coupled to the retaining device 400. The other end 112 of the strip 100 includes a ring 113 through which said end 111 of the strip 100 can be passed.

As it can be seen in the figures, the retaining device 400 is formed by two retaining parts 410, 420 which can be coupled together. One part 410 of the retaining device 400 is intended to be fixedly mounted inside the briefcase 200a or the bag 200b, specifically in the wall 210 of the briefcase 200a or the bag 200b. The other part 420 of the retaining device 400 is intended to be fixedly mounted outside the briefcase 200a or the bag 200b. As indicated above, the inner part 410 of the retaining device 400 includes an opening 412 formed therein. The opening 412 is suitably sized and shaped to receive the end 111 of the strip 110. As also stated, in the embodiment in which the retaining device 400 is adapted for releasably holding both ends 111, 112 of the strip 110, as shown in figures 5 and 16 of the drawings, the inner part 410 of the retaining device 400 further includes an opening 412' that is suitably sized and shaped to receive the other end 112 of the strip 110. The openings 412, 412' may extend toward the outer part 420 of the retaining device 400. This has been indicated in some of the drawings by reference numeral 422.

In a locking position, the end 111 of the strip 110 is releasably retained within the aperture 412 of the inner part 410 of the retaining device 400, as it will be described below. As indicated, there are embodiments in which, in said locking position, both ends 111, 112 of the strip 110 are releasably retained in corresponding openings 412, 412' of the inner part 410 of the retaining device 400.

In an assembled position, the two retaining parts 410, 420 are coupled to each other so that a wall 210 of the briefcase 200a or the bag 200b is provided therebetween as it can be seen in the figures. The retaining parts 410, 420 are fixed to each other and to the wall 210 of the briefcase 200a or the bag 200b sandwiched therebetween, as stated above, through screws 430, 435. Said screws 430, 435 can be suitably covered by a lid 440, as shown in figures 4a and 4b.

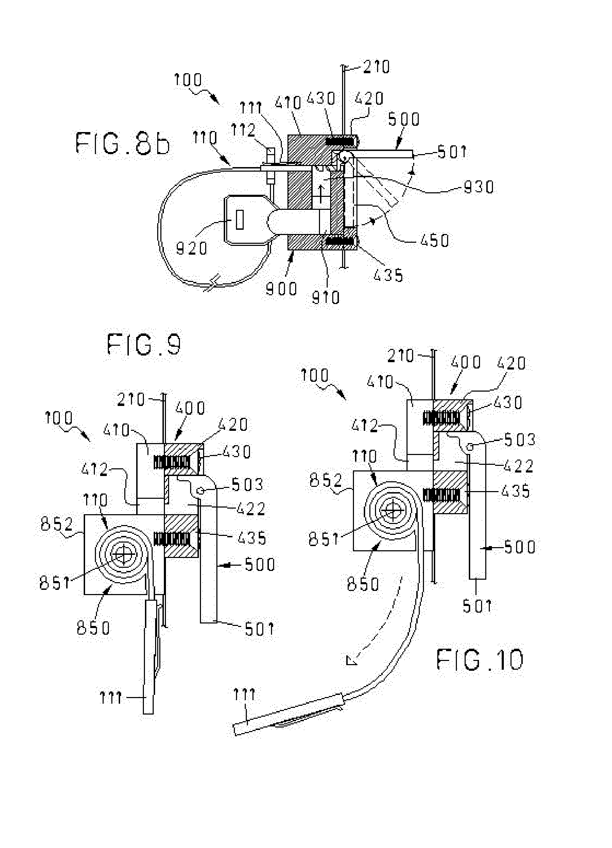

The outer retaining part 420 has a groove 450 formed on a front outer wall thereof to receive the lever 500, as it can be seen in figures 4a, 4b, and in figures 8a, b of the drawings. When the lever 500 is folded down, the outer front wall surface of the outer retaining part 420 is flush with the surface of the lever 500, that is, the lever 500 does not protrude from the outer retaining part 420 of the retaining device 400 in said position.

The retaining device 400, formed by the retaining parts 410, 420 as explained above, further includes a movable actuator 500. In the embodiments shown in the figures, the movable actuator is a lever 500 which is rotatably mounted on the retaining part 420 outside the briefcase 200a or the bag 200b. According to the detail view in figure 1b, the lever 500 has a free end 501 that is suitably adapted to be driven in rotation by the user. The lever 500 also has an opposite end 502. In or near this opposite end 502, a pivot point 503 is provided about which the lever 500 is rotated relative to the retaining device 400 when the user acts thereon to lock or unlock one or both ends 111, 112 of the strip 110. A locking area 504 is also provided near this opposite end 502 of the lever 500. The locking area 504 of the lever 500 has a protrusion 505. Such protrusion 505 has one end whose shape matches that of a recess 605 provided in a corresponding locking area 604 of the end 111 of the strip 110.

Given the rotating nature of the lever 500 that is mounted on the outer retaining part 420, in some embodiments biasing means may be provided in order to move from a locking position to an unlocking position of one or both ends 111, 112 of the strip 110, and vice versa. The biasing means are not shown in the drawings, but they would be suitably adapted to hold the lever 500 in a locking position or in an unlocking position as required according to the design of the device. In the case where the actuator is a rotatably operated lever 500, as illustrated, the biasing means may consist, for example, of a torsion spring. Other options are possible, including those where there is no spring acting on the lever 500.

The locking area 504 of the lever 500 and the locking area 604 of the end 111 of the strip 110 are such that, when the lever 500 is in a locking position, as shown in figure 1a for example, that is, with the lever 500 in a position substantially parallel to the horizontal, or substantially perpendicular to the wall 210 of the briefcase 200a or the bag 200b, the end 111 of the strip 110 is safely coupled to the retaining device 400, at least partially inserted into the opening 412 of the inner retaining part 410 of the retaining device 400. When the lever 500 is in an unlocking position, as shown in figures 9 and 10, for example, that is, with the lever 500 in a position substantially perpendicular to the horizontal, or substantially parallel to the wall 210 of the briefcase 200a or the bag 200b, the end 111 of the strip 110 can be disengaged from the retaining device 400, that is, it can be moved out of the opening 412 of the inner retaining part 410 of the retaining device 400, thus releasing the object 300a, 300b. This can be carried out easily by pulling the end 111 of the strip 110.

With the above described arrangement according to the examples shown and described herein, the rotating lever actuator 500 performs a locking function for the end 111 of the strip 100. In the embodiments shown, locking of the end 111 of the strip 100 occurs when the lever 500 is substantially parallel to the horizontal, or is substantially perpendicular to the wall 210 of the briefcase 200a or the bag 200b. In this locking position of the strip 100, it is prevented from being separated from the retaining device 400 by coupling the protrusion 505 that is formed in the locking area 504 of the lever 500 inside the matching recess 605 provided in the locking area 604 of the end 111 of the strip 110.

In order to hold the position of the lever 500 so that it is prevented to be rotated toward the unlocking position in an undesirable way, the closure device 100 is provided with locking means 700. The locking means 700 hold the lever 500 in the locking position, preventing the lever 500 from being rotated. A general arrangement of the locking means 700 of the lever 500 is shown by way of non-limiting example in figures 18 and 19. According to these figures 18 and 19, the locking means 700 of the lever 500 comprises a block 701 which is made of a resistant metallic material. The block 701 has a lever receiving part 702. This lever receiving part 702 has a threaded outer portion to threadingly engage a threaded inner portion 703 formed inside the block 701 of the locking means 700. The lever receiving part 702 is fixed on the block 701 by means of a fastening screw 704 which is also disposed inside the block 701. The lever receiving part 702 has a front recess 705. The frontal recess 705 of the lever receiving part 702 is configured to suitably receive the free end 501 of the lever 500, as shown in the exploded view of figure 18. The locking means 700 further comprises a locking member 710 which is mounted in the block 701. The locking member 710 comprises a lock 715 which can be actuated through a key 720. When actuating the locking member 710 through the key 720 the lever 500 is locked inside the front recess 705 of part 702, in block 701. In this position, the lever 500 can not be rotated into the unlocking position of the strip 110, preventing the object 300a, 300b stored inside the briefcase 200a or the 200b bag from being released.

In the embodiment of the locking means 700 of the lever 500 shown in figures 18 and 19 of the drawings, the block 701 is a separate member of the retaining device 400. This block 701 is intended to be mounted outside the briefcase 200a or the bag 200b. For example, with this particular arrangement of the locking means 700 of the lever 500, the block 701 could be part of a motorcycle bar end being part a closure device 100 of a security bag 200b for storing a helmet 300b therein. Other fixed locations where the block 701 of the locking means 700 of the lever 500 could be mounted are not ruled out.

In addition to the movable actuator 500, the retaining device 400 which is described herein is provided with an auxiliary closure device 900. One embodiment of the auxiliary closure device 900 is shown in figures 8a, 8b and 17 of the drawings. The auxiliary closure device 900 acts in addition to locking of the lever 500 as a security enhancement of the object 300a, 300b stored inside the body 200a, 200b. In one example, the auxiliary closure device 900 comprises an auxiliary lock 910 which is provided inside the retaining part 410 of the retaining device 400. The auxiliary lock 910 is adapted to be actuated, for example, through an auxiliary key 920. In some embodiments of the invention, the key 720 of the means 700 for locking the lever 500 and the auxiliary key 920 of the auxiliary closure device 900 can be the same. This auxiliary lock 910 cooperates with a sliding locking block 930 which is movably disposed within the inner retaining part 410, as it can be seen in figures 8a and 8b of the drawings. The sliding locking block 930 of the auxiliary lock 910 is provided with teeth 935 at its end portion. Such teeth 935 of the sliding locking block 930 have an arrangement matching the end 111 of the strip 110 which, as described above, is provided with corresponding recesses 605. Thus, with the described arrangement, when the auxiliary key 920 inserted by the user into the auxiliary lock 910 and rotated therein, said locking block 930 slides upwards according to figures 8a and 8b inside the inner retaining part 410 of the retaining device 400, up to a position where the locking of end 111 of the strip 110 occurs as the teeth 935 of the sliding locking block 930 enter inside said recess 605 of the end 111 of the strip 110, as shown in detail in figure 8b.

Therefore, with the disclosed embodiment of the retaining device 400, having the auxiliary closure device 900 shown in figures 8a, 8b and 17, the strip 100 is retained doubly through both the lever 500 and the auxiliary closure device 900, with the strip 100 being locked both from the inside and from the outside of the briefcase 200a or the bag 200b.

The embodiment described is not however limited to the auxiliary closure device 900 acting on the end 111 of the strip 110 when it is at least partially inserted inside the opening 412 of the retaining part 410 of the retaining device 400. Embodiments are envisaged in which either the auxiliary closure device 900 acts on the other end 112 of the strip 110 or the auxiliary closure device 900 acts on both ends 111, 112 of the strip 110.

Furthermore, the above described embodiment is also not limited to the auxiliary closure device 900 provided in the inner retaining part 410 of the retaining device 400 but the auxiliary lock 910 may be formed inside the outer retaining part 420 of said retaining device 400. On the other hand, said auxiliary closure device 900, which acts as a complement of the locking of the lever 500, alternative means could be used to actuate the sliding locking block 930 instead of a key, such as for example by fingerprint electronic activation, etc. and even it is foreseen that alternative electronic activation means of the sliding locking block 930 are activated remotely through for example a remote control.

With the auxiliary closure device 900 an enhanced security for the object 300a, 300b stored inside the briefcase 200a or bag 200b is advantageously achieved without increasing the whole complexity excessively. In any case, the auxiliary closure device 900 is optional.

Also in a variant of the closure device 100 that can be combined with any of those described above, the closure device 100 can be provided with an alarm device 800. The alarm device 800 may be provided with suitable means for outputting a visual and/or an acoustic signal and/or a vibration signal when unauthorized personnel have been detected to attempt to access the briefcase 200a or the bag 200b. The alarm device 800 may be adapted to be armed in several ways. One way of arming the alarm device 800 may be, for example, by rotating the lever 500 into the locking position (in the examples shown, by rotating the lever 500 into the horizontal position). Another way of arming the alarm device 800 may be, for example, by coupling one or both ends 111, 112 of the strip 100 to the retaining device 400. In this embodiment, and according to one of the above described examples, the alarm device 800 would be armed when the end 111 of the strip 110 is inserted into the opening 412 of the inner retaining part 410 of the retaining device 400. Another way of arming the alarm device 800 could also be through a remote control 810. Other options of the alarm device 800, such as a panic function in which the alarm device can be armed by the user as desired, and/or to enable and/or to set up a tracking device, can be activated by said remote control 810.

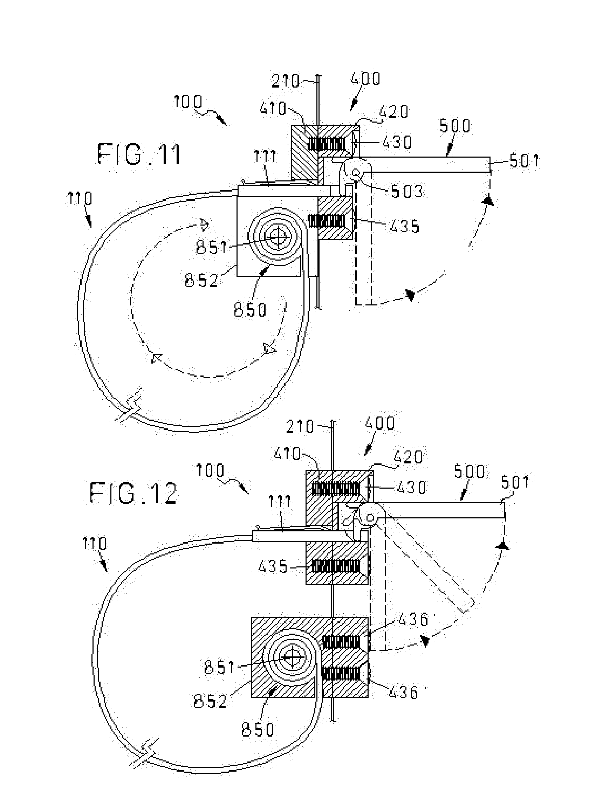

Figures 9 to 12 show one embodiment in which means 850 are provided for retracting the strip 110. The retracting means 850 which are shown by way of an example comprise a roller and torsion spring mechanism 851. Such roller and torsion spring mechanism 851 tends to keep the strip 110 wound around the roller, and a torsion spring, not shown, tends to keep the strip 110 in this condition, wrapped around the roller. The length of the strip 110 can be thus reduced by said retracting means 850 with the roller and torsion spring mechanism 851 so that, on one hand, minimal space is taken up inside the briefcase 200a or bag 200b, especially when not in use and on the other hand the strip 110 is always kept taut ensuring that the object 300a, 300b stored inside the briefcase 200a or the bag 200b is properly and efficiently held in place, preventing or at least reducing its movement therein. The means 850 for retracting the strip 110 are received inside a housing 852 which is formed on the inner retaining part 410 of the retaining device 400. However, embodiments of the housing 852, for example such as shown in figure 12, where said housing 852 is formed separated from the retaining device 400 are not ruled out. Here two screws 436, 436' are used for securing such separate housing 852, either on the wall 210 of the briefcase 200a or the bag 200b, or in any other appropriate place.

Although only a number of particular embodiments and examples of this closure device 100 and body 200a, 200b to which it can be applied have been described herein, it will be understood by those skilled in the art that other alternative embodiments and/or uses and obvious modifications and equivalents thereof are possible.

For example, a movable actuator in the form of a lever 500 rotatably mounted on the retaining part 420 outside the briefcase 200a or the bag 200b has been described herein. However, the movable actuator 500 may be a linear actuator movable between an unlocking position and a locking position of the strip 100. Moreover, although a hollow body 200a, 200b has been described which can be applied to said closure device 100 for storing an object 300a, 300b, of course the present closure device 100 is also effective for securely storing more than one object 300a, 300b inside the hollow body 200a, 200b, through which the same strip can be passed or by using several retaining devices 400 and several strips 100 as required according to the design.

The present disclosure covers all possible combinations of the particular embodiments described herein. The scope should not be limited by the particular embodiments described herein, but should be determined only by a fair reading of the claims that follow.

Reference signs related to drawings and placed in parentheses in a claim are solely for attempting to increase the intelligibility of the claim and shall not be construed as limiting the scope of the claim.

## Claims

1. Closure device (100) for securing objects (300a, 300b) contained inside a body (200a, 200b), the closure device (100) comprising:
- an elongated member (110) intended to be passed through the object (300a, 300b) stored inside the body (200a, 200b), the elongated member (110) having at least two ends (111,112); and
- at least one retaining device (400) adapted for releasably holding at least one end (111; 112) of the elongated member (110),
wherein the retaining device (400) comprises a movable actuator (500) having a locking area (504) whose shape matches the shape of a corresponding locking area (604) of at least one end (111, 112) of the elongated member (110), the shape of both locking areas (504, 604) being such that when the actuator (500) is in a locking position, at least one end (111, 112) of the elongated member (110) is coupled to the retaining device (400) and when the actuator (500) is in an unlocking position, said end (111; 112) of the elongated member (110) can be disengaged from the retaining device (400), and the closure device (100) further comprising,
- means (700) for locking the actuator (500) to prevent the actuator (500) from being moved at least when this is in said locking position.

2. Closure device (100) as claimed in claim 1, wherein the locking area (504) of the actuator (500) has a protrusion (505) and the locking area (604) of the end (111; 112) of the elongated member (110) is a recess (605) adapted to receive said protrusion (505).

3. Closure device (100) as claimed in claim 2, wherein said recess (605) is a through recess.

4. Closure device (100) as claimed in any of the preceding claims, wherein the actuator is a lever (500) rotatably mounted on the retaining device (400).

5. Closure device (100) as claimed in any of the preceding claims, wherein the retaining device (400) is formed by at least two retaining parts (410, 420) adapted such that one portion (210) of the body (200a, 200b) is provided therebetween.

6. Closure device (100) as claimed in any of the preceding claims, wherein one end (111) of the elongated member (110) is fixed to the retaining device (400) and the other end (112) of the elongated member (110) is intended to engage the retaining device (400) and be releasably retained therein.

7. Closure device (100) as claimed in any of claims 1 to 5, wherein one end (112) of the elongated member (110) is fixed to a portion (210) of the body (200a, 200b) and the other end (111) of the elongated member (110) is intended to engage the retaining device (400) and be releasably retained therein.

8. Closure device (100) as claimed in any of the preceding claims, wherein both ends (111, 112) of the elongated member (110) are adapted to engage the retaining device (400) and be releasably retained therein.

9. Closure device (100) as claimed in any of the preceding claims, wherein it further includes an alarm device (800) provided with means for outputting a signal when unauthorized persons attempt to open the body (200a, 200b).

10. Closure device (100) as claimed in claim 9, wherein the alarm device (800) is adapted to be armed by the movement of the actuator (500) into the locking position.

11. Closure device (100) as claimed in claim 9 or 10, wherein it further comprises means for remotely arming the alarm (810).

12. Closure device (100) as claimed in any of the preceding claims, wherein it comprises means (850) for retracting the elongated member (110).

13. Closure device (100) as claimed in any of the preceding claims, wherein it includes a housing (852) adapted to hold the elongated member (110) therein.

14. Closure device (100) as claimed in any of the preceding claims, wherein the retaining device (400) further comprises an auxiliary closure device (900) provided within the body (200a, 200b), comprising an auxiliary lock (910) capable of acting with a locking block (930) movably arranged within the retaining device (400) so that it can be slid into a position where it is capable of locking at least one end (111; 112) of the strip (110) that is at least partially inserted within the retaining device (400).

15. Security bag (200a, 200b), comprising a body adapted to store therein at least one object (300a, 300b), wherein it comprises at least one closure device (100) according to any of the preceding claims.
